# FASCICULE DE BREVET EUROPEEN

(11) **EP 1 112 885 B1**
(45) Date de publication et mention de la délivrance du brevet: **17.09.2003**
(21) Numéro de dépôt: 00460069.8
(22) Date de dépôt: 05.12.2000
(51) Int. Cl.: B60K 6/02, H02K 7/108

(54) **Dispositif d'entraînement de l'arbre primaire d'une boîte de vitesses pour véhicule à propulsion hybride**
Antriebsvorrichtung einer Antriebswelle eines Schaltgetriebes für Hybridfahrzeuge
Drive shaft arrangement for a gearbox for hybrid vehicle

(30) Priorité: 30.12.1999 FR 9916799
(43) Date de publication de la demande: 04.07.2001
(73) Titulaire: Peugeot Citroen Automobiles SA, 92200 Neuilly sur Seine (FR)
(72) Inventeur: Petiot, Jean-Paul, 91460 Marcoussis (FR)
(74) Mandataire: Le Faou, Daniel

(56) Documents cités:
- EP-A- 0 619 427

## Description

La présente invention a pour objet un dispositif d'entraînement de l'arbre primaire d'une boîte de vitesses pour un véhicule à propulsion hybride. Un dispositif d'entraînement selon le préambule de la revendication 1 est généralement connu.

Par l'expression "propulsion hybride", on entendra dans la présente description, ainsi que dans les revendications qui suivent, une propulsion qui est réalisée à partir d'un moteur thermique et d'un moteur électrique, le véhicule étant équipé de ces deux types de moteur.

L'invention s'adresse particulièrement à l'entraînement d'un arbre primaire de boite de vitesses dont est solidaire le rotor (annulaire) du moteur électrique.

Elle se rapporte plus précisément à un dispositif de transmission dans lequel un embrayage est intercalé entre le volant d'inertie solidaire de l'arbre du vilebrequin du moteur thermique et l'arbre primaire de la boite de vitesses, qui est solidaire du rotor du moteur électrique.

Cet embrayage est de type connu, par exemple à diaphragme, et le moyeu du disque d'embrayage est mobile axialement sur une portion de l'arbre primaire, dont il est solidaire en rotation par une liaison à cannelures.

Le rotor du moteur électrique est monté sur le tronçon de l'arbre primaire qui est situé entre cette partie cannelée (qui porte le disque d'embrayage) et la portée de roulement de l'arbre dans le carter de la boite de vitesses.

Pour des considérations liées notamment à la résistance mécanique de l'arbre et des organes qu'il porte, ainsi qu'à des problèmes de montage de l'ensemble, il se trouve que le diamètre de la portée de l'arbre dans le roulement du carter de boite de vitesses et le diamètre de l'arbre au niveau des cannelures qui reçoivent le disque d'embrayage sont voisins, le second diamètre précité étant à peine plus petit que le premier.

Il n'est donc pas possible de disposer dans la zone de l'arbre qui se trouve entre ces deux portions un épaulement correspondant à une variation importante de diamètre, et qui serait susceptible de servir de butée au moyeu du rotor du moteur électrique.

La présente invention a pour principal objectif de pallier cette difficulté en proposant un mode de montage du moyeu en cette zone, qui ne nécessite pas la présence d'un tel épaulement, tout en étant d'une conception simple, facile à mettre en oeuvre, et permettant, en outre, de positionner de manière précise le moyeu sur l'arbre primaire, juste à l'endroit souhaité en direction axiale.

Un autre objectif de l'invention est de proposer un mode de montage du moyeu du rotor qui soit relativement compact, de manière à libérer un espace suffisant à l'intérieur du moteur électrique pour loger une butée hydraulique permettant d'actionner l'embrayage dont il a été fait état plus haut.

Ces objectifs sont atteints, conformément à l'invention, grâce au fait que - d'une part - le rotor (de configuration annulaire) est porté par un moyeu à ouverture cannelée monté sur une portion de l'arbre primaire pourvue de cannelures complémentaires, ce qui assure leur liaison en rotation, et que - d'autre part - ce moyeu est immobilisé en translation sur ladite portion cannelée, d'un côté par un premier élément d'appui rapporté sur l'arbre et, de l'autre côté, par un écrou vissé sur un manchon fileté, ce dernier présentant également une ouverture cannelée s'adaptant sur la portion, et étant bloqué en translation par un second élément d'appui, également rapporté sur l'arbre.

Par ailleurs, selon un certain nombre de caractéristiques additionnelles, non limitatives de l'invention :
- ledit écrou est immobilisé en rotation par rapport audit manchon fileté ;
- lesdits éléments d'appui sont des segments ou des demi-rondelles qui s'engagent dans des gorges formées dans l'arbre ;
- lesdits éléments d'appui sont positionnés sur la portion cannelée ;
- l'écrou, le manchon et ledit second élément d'appui sont positionnés à l'intérieur du moteur électrique ;
- le stator du moteur électrique (également de configuration annulaire) est disposé à l'intérieur du rotor, et est supporté par un élément de bâti auquel est fixée la butée hydraulique ;
- ledit élément de bâti est solidaire du carter de la boîte de vitesses.

D'autres caractéristiques et avantages de l'invention apparaîtront de la description qui va suivre, en référence aux dessins annexés, qui représentent un mode de réalisation préféré de l'objet de l'invention.

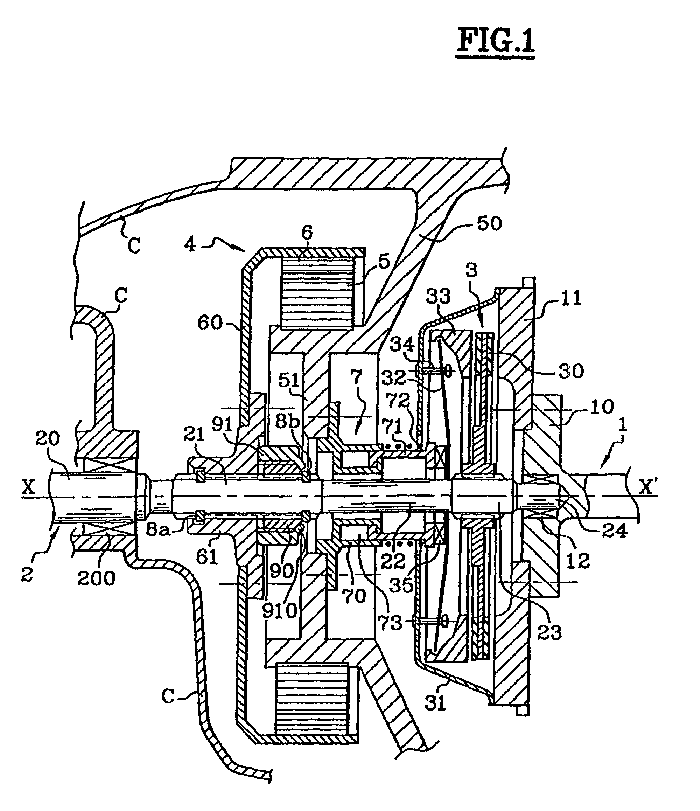

Sur ces dessins, la figure 1 (figure unique) est une vue générale schématique du dispositif d'entraînement, représenté en coupe, le plan de coupe passant par l'axe commun XX' de l'arbre de vilebrequin et de l'arbre primaire de la boite de vitesses.

On distingue sur la droite de la figure 1 la portion d'extrémité de l'arbre de vilebrequin 1 d'un moteur thermique non représenté.

Il s'agit par exemple d'un moteur à quatre temps, à essence ou du type Diesel.

On a désigné par la référence 2 la partie d'extrémité de l'arbre primaire d'une boite de vitesses, manuelle ou automatique, de type connu, qui n'est pas non plus représentée.

Cette boite de vitesses est logée à l'intérieur d'un carter désigné par la référence C.

A l'entrée de la boite de vitesses, la portion correspondante de l'arbre 2, référencée 20, est guidée dans un palier de roulement 200 porté par le carter **C**.

De manière bien connue, l'extrémité de l'arbre de vilebrequin 1 est solidaire d'un disque 10 sur lequel est monté un volant d'inertie 11. On notera que le disque 10 est généralement monobloc avec le vilebrequin 1.

Le disque 10 est percé d'un alésage central servant au guidage en rotation de la portion d'extrémité 24, de diamètre minimal, de l'arbre 2.

Ce guidage en rotation est réalisé au moyen d'un roulement 12, par exemple à aiguilles.

Les arbres 1 et 2 sont ainsi mutuellement centrés selon l'axe **XX'**, avec possibilité de solidarisation ou de désolidarisation relative en rotation, au moyen d'un embrayage 3.

Dans l'exemple illustré, il s'agit d'un embrayage de type connu, comprenant un disque 30 pourvu de garnitures de friction, à haut coefficient de frottement, et dont le moyeu est rainuré, ce moyeu s'engageant sur des cannelures prévues sur la portion d'arbre 23 située à proximité de la portion d'extrémité 24 dont il a été fait état plus haut.

Le disque 30 peut donc coulisser en translation selon **XX'** sur la portion d'arbre 23, tout en étant constamment solidaire en rotation de l'arbre 2.

A la périphérie du volant 11 est fixé un capot 31 en forme d'assiette, à l'intérieur duquel est contenu le disque 30.

De l'autre côté du disque 30, par rapport au volant 11, et toujours à l'intérieur du capot 31, se trouve un organe presseur annulaire 33, qui est sollicité par un disque élastique ou diaphragme 32.

Celui-ci peut se déformer pour prendre sélectivement, soit une disposition sensiblement plane, dans un plan perpendiculaire à **XX'**, ou légèrement conique, soit une configuration légèrement conique de courbure opposée - comme représentée sur le dessin - selon que sa partie centrale est soumise ou non à une poussée axiale, selon **XX'**, en direction de l'arbre 1 (vers la droite du dessin).

Ce disque est solidarisé avec le capot 31, par l'intermédiaire de tiges 34, disposées axialement dans la zone périphérique du diaphragme.

Le volant11, le capot 31, le diaphragme 32, et l'organe de poussée 33 tournent en bloc avec l'arbre 1.

La situation illustrée sur la figure 1 correspond à une position de débrayage.

L'organe pousseur 33 - également en forme de disque - est écarté du disque d'embrayage 30, qui est lui-même écarté du volant 11.

L'arbre 1 n'entraîne donc pas l'arbre 2.

Dans cette situation le diaphragme 32 a une configuration conique dont la concavité est tournée vers la gauche du dessin.

La poussée, ou au contraire l'absence de poussée, sur la partie centrale du diaphragme est réalisée au moyen d'une butée hydraulique 7, dont le piston 71 porte sur la partie centrale annulaire du diaphragme par l'intermédiaire d'un plateau de roulement 35.

La présence de ce plateau de roulement, qui peut être un simple roulement à billes, est liée au fait que le piston 71 est immobile en rotation, tandis que le diaphragme 32 tourne constamment avec l'arbre 1.

Dans la situation illustrée, comme cela sera expliqué plus loin, le piston d'actionnement de l'embrayage 71 est en extension vers la droite, ce qui provoque la déformation du diaphragme 32 pour former un cône orienté comme indiqué sur le dessin, entraînant le déplacement de l'organe pousseur 33 vers la gauche, et corrélativement, le débrayage.

En cas de déplacement du piston 71 vers la gauche, le diaphragme reprend sa situation normale, et déplace vers la droite le disque 33, ce qui a pour effet d'emprisonner, avec un certain serrage, les garnitures du disque 30 entre l'organe 33 et le volant 11, de sorte que la solidarisation du disque 30 et, corrélativement, de l'arbre 2, avec l'arbre 1 est assurée en rotation.

Ce genre d'embrayage est bien connu.

Le moteur électrique référencé 4 comprend un stator 5 et un rotor 6 annulaires, le rotor 6 étant extérieur, c'est-à-dire entourant le stator 5.

Ce dernier est porté par un élément de bâti 50 qui est solidaire du carter **C**.

Le rotor 6 est fixé à l'intérieur d'une pièce 60 en forme de cuvette, elle-même fixée à un moyeu 61 emmanché avec un certain jeu sur l'arbre 2.

Le moyeu 61 est placé sur une portion 21 de l'arbre 2 qui est située à proximité de la portion 20 précitée d'entrée dans le carter **C**.

On a désigné par la référence 22 une portion d'arbre lisse, de plus petit diamètre, qui relie les portions 21 et 23 précitées.

La portion 21 est cannelée, de manière similaire à la portion 23.

Les cannelures 21 ont une dimension radiale identique ou légèrement supérieure aux cannelures de la portion 23.

Le moyeu 61 présente des rainures correspondantes qui assurent sa liaison en translation avec l'arbre 2.

La pièce 60 est fixée au moyeu 61 par tout moyen approprié, par exemple au moyen de boulons dont les traits d'axe sont représentés sur la figure ; une liaison par soudage peut être également envisagée.

La portion cannelée 21 présente, dans sa zone d'extrémité tournée vers la boite de vitesses (sur la gauche de la figure), une gorge dans laquelle est engagé un élément d'appui 8a.

Il s'agit par exemple d'un circlips ou de deux demi-rondelles.

Cet élément d'appui constitue une butée pour l'un des deux côtés du moyeu 61, en l'occurrence le côté gauche sur la figure.

On notera que, dans l'exemple illustré, le moyeu 61 possède, de ce côté (sur la gauche), un lamage dans lequel vient se loger l'élément d'appui 8a.

De l'autre côté (sur la droite), le moyeu est immobilisé sur la portion d'arbre 21 au moyen d'un écrou 91 ; celui-ci est vissé sur un manchon cannelé 90, qui s'adapte sur les cannelures de la portion 21.

Le manchon 90 possède une paroi extérieure filetée, sur laquelle est vissé l'écrou 91.

La face frontale de l'écrou 91 qui est tournée vers la gauche vient porter contre la face correspondante du moyeu 61.

Du côté opposé (vers la droite), l'écrou 91 comporte des languettes 910 susceptibles d'être rabattues dans des évidements ad-hoc prévus sur le manchon 90, de manière à ce que les deux pièces 90 et 91 soient immobilisées en rotation l'une par rapport à l'autre, une fois que l'écrou 91 est venu en butée contre le moyeu 61.

L'écrou 91 est alors indévissable.

Le manchon 90, quant à lui, est retenu en translation, vers la droite, par un second élément d'appui 8b identique ou similaire à l'élément 8a mentionné plus haut.

Il s'agit d'un circlips ou d'une paire de demi-rondelles par exemple, logé(es) dans une rainure ménagée dans la partie cannelée 21.

Grâce à cette disposition, le moyeu 61, et par conséquent le rotor 6, est parfaitement immobilisé en translation sur l'arbre 2.

L'élément fixe 50, qui supporte le stator 5, possède une partie annulaire 51, percée intérieurement, qui entoure coaxialement l'arbre 2.

C'est sur cette partie qu'est fixé le cylindre 70 de la butée hydraulique 7 déjà mentionnée.

On a désigné par la référence 73 la chambre hydraulique de ce cylindre, et par la référence 72 un élément élastique, en l'occurrence un ressort hélicoïdal, qui tend constamment à appliquer le piston 71 sur le diaphragme 32.

Ce ressort 72 annule le jeu entre le piston 71 et le diaphragme 32.

Pour provoquer le débrayage, on met la chambre 73 sous pression, de manière à déplacer vers la droite de la figure le piston 71, ce qui provoque le désaccouplement des arbres 1 et 2.

Le système de montage du moyeu 61 sur l'arbre 2, qui fait l'objet de la présente invention, est d'une conception simple, facile à mettre en oeuvre et permet un montage extrêmement précis en direction axiale du rotor sur son arbre.

Ce système de montage, en outre, n'est pas incompatible avec un diamètre égal ou sensiblement voisin des portions 21 et 23.

De plus, il ménage à l'intérieur du rotor 5 un espace suffisant pour loger au moins partiellement la butée hydraulique 7 qui commande l'embrayage 3.

Grâce à cette disposition, l'ensemble constitué par le moteur électrique, la butée hydraulique et l'embrayage présente un encombrement relativement réduit.

Lorsque l'embrayage est actif, l'arbre primaire 2 est entraîné par le moteur thermique et, éventuellement, également par le moteur électrique, si celui-ci est alimenté en courant.

En position débrayée, seul le moteur électrique entraîne l'arbre 2, ce qui peut être utile pour un déplacement du véhicule à faible vitesse, en trajet urbain par exemple.

Le moteur électrique peut également être utilisé pour faire démarrer le moteur thermique, après embrayage du dispositif.

## Revendications

1. Dispositif d'entraînement de l'arbre primaire (2) d'une boîte de vitesses pour véhicule à propulsion hybride, réalisée à partir d'un moteur thermique et d'un moteur électrique, dans lequel le rotor du moteur électrique est solidaire dudit arbre primaire, **caractérisé par le fait que** - d'une part - ledit rotor (6) est porté par un moyeu (61) à ouverture cannelée monté sur une portion (21) de l'arbre primaire (2) pourvue de cannelures complémentaires, ce qui assure leur liaison en rotation, **et que** - d'autre part - ce moyeu (61) est immobilisé en translation sur ladite portion cannelée (21), d'un côté par un premier élément d'appui (8a) rapporté sur l'arbre (2) et, de l'autre côté, par un écrou (91) vissé sur un manchon fileté (90), ce dernier présentant également une ouverture cannelée s'adaptant sur la portion (21), et étant bloqué en translation par un second élément d'appui (8b), également rapporté sur l'arbre (2).

2. Dispositif selon la revendication 1, **caractérisé par le fait que** ledit écrou (91) est immobilisé en rotation par rapport audit manchon fileté (90).

3. Dispositif selon la revendication 1 ou 2, **caractérisé par le fait que** lesdits éléments d'appui (8a, 8b) sont des segments ou des demi-rondelles qui s'engagent dans des gorges formées dans l'arbre (2).

4. Dispositif selon l'une des revendications 1 à 3, **caractérisé par le fait que** lesdits éléments d'appui (8a, 8b) sont positionnés sur la portion cannelée (21).

5. Dispositif selon l'une des revendications 1 à 4, **caractérisé par le fait que** l'écrou (91), le manchon (90) et ledit second élément d'appui (8b) sont positionnés à l'intérieur du moteur électrique (4).

6. Dispositif selon la revendication 5, **caractérisé par le fait que** le stator (5) du moteur électrique est disposé a l'intérieur du rotor (6), et est supporté par un élément de bâti (50) auquel est fixée une butée hydraulique (4).

7. Dispositif selon la revendication 6, **caractérisé par le fait que** ledit élément de bâti (50) est solidaire du carter de la boîte de vitesses.

## Patentansprüche

1. Antriebsvorrichtung für die Antriebswelle (2) eines Getriebes für ein Fahrzeug mit einem Hybridantrieb, der aus einem Verbrennungsmotor und einem Elektromotor besteht, bei dem der Rotor des Elektromotors fest mit dieser Antriebswelle verbunden ist,
**dadurch gekennzeichnet, dass**
einerseits dieser Rotor (6) in einer Nabe (61) mit einer geriffelten Öffnung gelagert ist, die auf einem Teil (21) der Antriebswelle (2) montiert ist, welcher mit komplementären Riffelungen ausgestattet ist, wodurch ihre drehfeste Verbindung gewährleistet wird, und **dass** andererseits diese Nabe (61) auf diesem geriffelten Teil (21) einerseits mit Hilfe eines ersten Lagerelementes (8a), das auf der Welle (2) montiert ist, und andererseits durch eine Mutter (91) gegen Verschiebung festgelegt wird, die auf einen Schraubstutzen (90) aufgeschraubt wird, der ebenfalls mit einer geriffelten Öffnung versehen ist, welche auf den Teil (21) angepasst ist, und mit Hilfe eines zweiten Lagerelementes (8b), das ebenfalls auf der Welle (2) montiert ist, gegen Verschiebungen blockiert ist.

2. Antriebsvorrichtung nach Anspruch 1,
**dadurch gekennzeichnet, dass**
die Mutter (91) drehfest gegenüber dem Schraubstutzen (90) blockiert ist.

3. Antriebsvorrichtung nach einem der Ansprüche 1 oder 2,
**dadurch gekennzeichnet, dass**
die Lagerelemente (8a, 8b) aus Segmenten oder halben' Scheiben bestehen, welche in Nuten eingreifen, die in die Welle (2) eingebracht sind.

4. Antriebsvorrichtung nach einem der Ansprüche 1 bis 3,
**dadurch gekennzeichnet, dass**
die Lagerelemente (8a, 8b) auf dem geriffelten Teil (21) positioniert sind.

5. Antriebsvorrichtung nach einem der Ansprüche 1 bis 4,
**dadurch gekennzeichnet, dass**
die Mutter (91), der Schraubstutzen (90) und das zweite Lagerelement (8b) innerhalb des Elektromotors (4) angeordnet sind.

6. Antriebsvorrichtung nach Anspruch 5,
**dadurch gekennzeichnet, dass**
der Stator (5) des Elektromotors innerhalb des Rotors (6) angeordnet ist und von einem Tragelement (50) getragen wird, an dem ein hydraulisches Widerlager (4) befestigt ist.

7. Antriebsvorrichtung nach Anspruch 6,
**dadurch gekennzeichnet, dass**
das Tragelement (50) fest mit dem Gehäuse des Getriebes verbunden ist.

## Claims

1. A device for driving the primary shaft (2) of a gearbox for a vehicle having hybrid propulsion provided by a heat engine and by an electric motor, in which the rotor of the electric motor is secured to said primary shaft, the device being **characterized by** the facts that firstly said rotor (6) is carried by a hub (61) having a fluted opening mounted on a portion (21) of the primary shaft (2) provided with complementary fluting, thus constraining them to rotate together, and that, secondly, the hub (61) is prevented from moving in translation on said fluted portion (21), on one side by a first stop element (8a) fitted to the shaft (2), and on the other side by a nut (91) screwed onto a threaded sleeve (90), which sleeve also presents a fluted opening fittable on the portion (21), and being prevented from moving in translation by a second stop element (8b) also fitted on the shaft (2).

2. A device according to claim 1, **characterized by** the fact that said nut (91) is prevented from moving in rotation relative to said threaded sleeve (90).

3. A device according to claim 1 or claim 2, **characterized by** the fact that said stop elements (8a, 8b) are segments or half-washers which engage in grooves formed in the shaft (2).

4. A device according to any one of claims 1 to 3, **characterized by** the fact that said stop elements (8a, 8b) are positioned on the fluted portion (21).

5. A device according to any one of claims 1 to 4, **characterized by** the fact that the nut (91), the sleeve (90), and said second stop element (8b) are positioned inside the electric motor (4).

6. A device according to claim 5, **characterized by** the fact that the motor stator (5) is disposed inside the rotor (6) and is supported by a structural element (50) to which a hydraulic abutment (4) is fixed.

7. A device according to claim 6, **characterized by** the fact that said structural element (50) is secured to the case of the gearbox.
